# EUROPÄISCHE PATENTSCHRIFT

(11) **EP 3 870 467 B1**
(45) Veröffentlichungstag und Bekanntmachung des Hinweises auf die Patenterteilung: **11.03.2026**
(21) Anmeldenummer: 19795495.1
(22) Anmeldetag: 22.10.2019
(51) Int. Cl.: B60H 1/32, F25B 6/04, F25B 6/02, F25B 5/02, F25B 25/00, F25B 40/00

(54) **KÄLTEANLAGE**
REFRIGERATION SYSTEM
INSTALLATION FRIGORIFIQUE

(30) Priorität: 25.10.2018 DE 102018218264
(43) Veröffentlichungstag der Anmeldung: 01.09.2021
(73) Patentinhaber: AUDI AG, 85045 Ingolstadt (DE)
(72) Erfinder: SCHROEDER, Dirk, 85077 Manching (DE); REBINGER, Christian, 80807 München (DE); ROTTENKOLBER, Helmut, 93349 Mindelstetten (DE)
(86) Internationale Anmeldenummer: PCT/EP2019/078753
(87) Internationale Veröffentlichungsnummer: WO 2020/083927

(56) Entgegenhaltungen:
- EP-A1- 1 632 372
- WO-A1-2016/118062
- DE-A1- 102014 003 907
- DE-A1- 102014 018 524
- DE-A1- 102015 015 125
- DE-A1- 102016 007 490
- DE-A1- 102016 214 119
- KR-A- 20120 065 027
- KR-A- 20170 013 700
- KR-A- 20170 113 948

## Beschreibung

Die Erfindung betrifft eine Kälteanlage mit einem für den AC-Betrieb betreibbaren Kältemittelkreislauf.

Elektrifizierte Fahrzeuge benötigen neben dem Frontverdampfer als mindestens einen Innenraumverdampfer einen separaten Kühlmittelkreislauf zur Konditionierung und Temperierung des in der Regel als Hochvoltbatterie realisierten Energiespeichers. Ein solcher Kühlmittelkreislauf wird mittels eines Wärmeübertragers mit dem Kältemittelkreislauf gekoppelt, wobei ein solcher Wärmeübertrager seinerseits ebenfalls als Verdampfer zum Kühlen eines Zuluftstromes bzw. als sogenannter Chiller zum Kühlen von Wasser ausgebildet ist.

Der Kühlbedarf von Hochvolt-Batterien in elektrifizierten Fahrzeugen steigt überproportional mit dem Verhältnis von elektrischer Leistungs-Aufnahme oder Leistungs-Abgabe zur Speicherkapazität (im Weiteren "Leistungs-Kapazitäts-Faktor" genannt).

Ist dieser Leistungs-Kapazitäts-Faktor niedrig, so dauert das Entladen bzw. Laden der Batterie stets mehrere Stunden und man spricht von sog. Energiezellen. Deren thermische Belastung ist in der Regel so gering, dass auf eine spezielle Kühlung verzichtet werden kann.

Anders verhält es sich bei den sogenannten Leistungszellen, bei denen sowohl das Entladen als auch das Laden in sehr kurzen Zeiten erfolgen kann. Hier ist aufgrund der inneren elektrischen Widerstandsverluste die entsprechende Verlustleistung und damit Wärmeentwicklung so hoch, dass eine Kühlung erforderlich wird. Neben der Kühlung mit Luft, die einen zusätzlichen Bauraum erfordert, setzt sich in der Automobiltechnik die Kühlung mit flüssigen Medien durch. Diese sog. Fluide umströmen im Idealfall die Batteriezellen direkt; bisher gebräuchlich sind vor allem sog. Flächenkühler, die flächigen Kontakt mit den zu kühlenden Batteriezellen haben und selbst vom Kühlfluid durchströmt werden. Die Rückkühlung des Kühlfluids erfolgt je nach Umgebungseinsatzbereich
- entweder passiv bei niedrigen Umgebungstemperaturen über einen Fluidkühler zur Umgebungsluft im Frontend des Fahrzeugs, oder
- aktiv bei höheren und hohen Umgebungstemperaturen über einen Kältemittelverdampfer (auch "Chiller" genannt), der an den Kältekreis für die Innenraumklimatisierung angebunden ist.

Von den oben beschriebenen Kühlfällen muss der zweitgenannte mit hoher Kühlleistungsanforderung der Batterie bei hohen Umgebungstemperaturen besonders betrachtet werden. Nachdem bei hohen Umgebungstemperaturen auch die Kühlanforderung des Innenraums sehr hoch ist, konkurrieren die beiden Anforderungen um die maximal verfügbare Kälteleistung des Kältekreises. Möglicherweise könnte sowohl die Kühlanforderung des Innenraums als auch die der Batterie jeweils für sich der maximal verfügbaren Kälteleistung entsprechen. Damit könnte sowohl der Innenraum als auch die Batterie nur mit einem Teil der jeweils benötigten Kälteleistung versorgt werden, wodurch sowohl der Klimakomfort des Innenraums leiden als auch die Batterie sich trotz Kühlung weiter erwärmt würde. So könnte die Innenraumklimatisierung zu Gunsten des Komponentenschutzes bzw. zur Sicherstellung der Weiterfahrt des Fahrzeuges deaktiviert werden.

Die KR 2017 0113948 A offenbart eine Kälteanlage mit einem für den AC-Betrieb betreibbaren Kältemittelkreislauf. Diese Kälteanlage umfasst ein Klimagerät, welches in einen Kaltluftkanal und einen Heißluftkanal unterteilt ist und wobei jeder Kanal jeweils mittels eines Gebläses mit einem Luftstrom versorgt werden. In dem Kaltluftkanal ist ein Verdampfer angeordnet, während in dem Heißluftkanal sich zwei seriell verbundene Kondensatoren als Luft-Kältemittel-Wärmeübertrager befinden. Der Verdampfer mit einem Expansionsorgan sowie ein denselben parallel geschalteten zur Kühlung einer Batterie vorgesehenen Chiller (Kühlmittel-Kältemittel-Wärmeübertrager) mit Expansionsorgan und die beiden Kondensatoren bilden zusammen mit einem Kältemittelverdichter den Kühlmittelkreislauf..

Ferner ist diesem bekannten Kältemittelkreislauf ein indirekter Kühlmittel-Kältemittel-Wärmeübertrager direkt dem Verdichter nachgeschaltet, wobei dieser indirekte Kühlmittel-Kältemittel-Wärmeübertrager kühlmittelseitig mit einem Kühler verbunden ist. Das aus diesem indirekten Kühlmittel-Kältemittel-Wärmeübertrager strömende Kältemittel wird direkt den in dem Kaltluftkanal des Klimagerätes angeordneten Luft-Kältemittel-Wärmeübertragern zugeführt.

Aus der EP 1 632 372 A1 ist eine Fahrzeug-Standklimaanlage mit einem Kältemittelkreislauf bekannt, welche mindestens einen Kältemittelverdichter, einen ersten luftgekühlten Kondensator mit einem desselben zugeordneten ersten Lüfter und einen zweiten luftgekühlten Kondensator mit einem demselben zugeordneten zweiten Lüfter aufweist. Bei laufendem Motor des Fahrzeugs durchströmt das Kältemittel den ersten luftgekühlten Kondensator, welcher von mit dem ersten Lüfter geförderten Luftstrom gekühlt wird, wird jedoch mittels einer Bypassleitung an dem zweiten luftgekühlten Kondensator vorbeigeleitet. Im Standbetrieb wird das Kältemittel durch den ersten Kondensator bei stehendem Betrieb des ersten Lüfters und anschließend durch den zweiten luftgekühlten Kondensator bei laufendem zweiten Lüfter geführt. Es ist auch möglich für den ersten luftgekühlten Kondensator eine Bypass-Leitung vorzusehen, so dass im Standbetrieb das Kältemittel direkt unter Umgehung des ersten luftgekühlten Kondensators dem zweiten luftgekühlten Kondensator zugeführt wird.

Alternativ können bei dieser bekannten Fahrzeug-Standklimaanlage die beiden luftgekühlten Kondensatoren in einer Parallelschaltung angeordnet werden, so dass bei laufendem Motor des Fahrzeugs nur der erste luftgekühlte Kondensator und im Standbetrieb nur der zweite luftgekühlte Kondensator von Kältemittel durchströmt wird.

Die DE 10 2014 003 907 A1 beschreibt einen Kältemittelkreislauf mit einem Verdampfer als Innenwärmetauscher, einem Kältemittelverdichter, einem Luft-Kältemittel-Wärmetauscher als äußeren Kondensator und einem Wärmepumpen-Kondensator als Heizregister, welcher zusammen mit dem Verdampfer ein Klimagerät bildet.

Eine Klimaanlage für ein mit einem für den AC-Betrieb betreibbaren Kältemittelkreislauf weist gemäß der DE 10 2016 007 490 A1 oder der DE 10 2015 015 125 A1 einen in einem Klimagerät angeordneten Verdampfer, einen zur Kühlung einer elektrischen Komponente vorgesehenen Kühlmittel-Kältemittel-Wärmeübertrager und einen Kältemittelverdichter auf, welchem ein indirekter Kühlmittel-Kältemittel-Wärmetauscher nachgeordnet ist. In einem Kühlbetrieb wird das von dem Kältemittelverdichter verdichtete Kältemittel über den indirekten Kühlmittel-Kältemittel-Wärmetauscher einem äußeren Luft-Kältemittel-Wärmeübertrager als Kältemittelkondensator zugeführt, während in einem Heizbetrieb das auf Hochdruck verdichtete Kältemittel nicht diesem äußeren Luft-Kältemittel-Wärmeübertrager zugeführt wird, sondern das Kältemittel fließt nach dem Durchströmen des indirekten Kühlmittel-Kältemittel-Wärmetauschers durch einen in dem Klimagerät angeordneten Heizregister. Diesem Heizregister ist luftseitig ein weiteres Heizregister nachgeschaltet, welches über einen Kühlmittelkreislauf mit dem indirekten Kühlmittel-Kältemittel-Wärmetauscher thermisch verbunden ist.

Eine Klimaanlage für ein Fahrzeug mit einem Kältemittelkreislauf ist auch aus der DE 10 2014 018 524 A1 bekannt. Dieser Kältemittelkreislauf umfasst einen Verdampfer, einen Kältemittelverdichter und zwei dem Kältemittelverdichter nachgeschalteten indirekten Kühlmittel-Kältemittel-Wärmeübertrager, die in einem Klimagerät angeordnet sind. Diese beiden indirekten Kühlmittel-Kältemittel-Wärmeübertrager sind seriell über ein Expansionsorgan verbunden, so dass mit diesen beiden Kondensatoren eine 2-stufige Kondensation durchführbar ist.

Eine Wärmepumpe mit einem Kältemittelkreislauf ist aus der WO 2016/118062 A1 bekannt. Dieser Kältemittelkreislauf umfasst einen als Verdampfer eingesetzten indirekten Kühlmittel-Kältemittel-Wärmeübertrager, welcher über einen Kühlmittelkreislauf mit wärmeerzeugenden Objekten thermisch verbunden ist, einen Kältemittelverdichter und einen indirekten Kühlmittel-Kältemittel-Wärmeübertrager als äußeren Kondensator, welcher über einen Kühlmittelkreislauf mit Wärmesenken verbunden ist. Dem als Verdampfer eingesetzten indirekten Kühlmittel-Kältemittel-Wärmeübertrager ist ein Expansionsorgan vorgeschaltet. Ein Teil des von dem Kältemittelverdichter auf Hochdruck verdichteten Kältemittels wird einem Konverter zugeführt, welcher aus der thermischen Energie des Kältemittels elektrische Energie erzeugt. Nach dem Durchströmen dieses Konverters wird das Kältemittel einem indirekten Kühler und anschließend über ein Expansionsorgan dem Verdampfer zugeführt, wobei der indirekte Kühler mit dem die wärmeerzeugenden Objekte aufweisenden Kühlmittelkreislauf thermisch verbunden ist.

Aus der DE 10 2016 214 119 A1 ist eine Klimaanlage für ein Fahrzeug mit einem Kältemittelkreislauf bekannt, wobei der Kältemittelkreislauf neben erforderlichen Komponenten einen als Heizregister ausgeführten Wärmeübertrager aufweist. Dieser Wärmeübertrager weist einen Filter und ein aus PTC-Widerstandselementen aufgebautes elektrisches Wärmeübertragersegment auf. Zwischen dem Filter und dem elektrischen Wärmeübertragersegment ist ein erstes Luft-Kältemittel-Wärmeübertragersegment und ein zweites Luft-Kältemittel-Wärmeübertragersegment angeordnet. Diese beiden Wärmeübertragersegmente können bezüglich der Luftströmung übereinander oder hintereinander angeordnet werden.

Die KR 2017 013700 A beschreibt eine Kälteanlage für ein Fahrzeug mit einem Kältemittelkreislauf, welcher mit einem Kühlmittelkreislauf zur Kühlung einer Traktionsbatterie des Fahrzeugs und zur Kühlung von elektrischen Komponenten eines Antriebsstranges ausgebildet ist. Der Kältemittelkreislauf umfasst einen Verdampfer mit zugeordnetem Expansionsorgan zur Innenraumkühlung, einen dem Verdampfer parallelgeschalteten Chiller zur Batteriekühlung, einen Kältemittelverdichter sowie zwei dem Kältemittelverdichter seriell nachgeschaltete äußere Luft-Kältemittel-Wärmeübertrager. Ein weiterer äußerer Luft-Kühlmittel-Wärmeübertrager befindet sich in dem Kühlmittelkreislauf.

Ein Kältemittelkreislauf gemäß der KR 2012 0065027 A weist einen Verdampfer zur Innenraumkühlung mit zugeordnetem Expansionsorgan, einen äußeren Luft-Kältemittel-Wärmeübertrager, einen inneren Wärmeübertrager und einen Kältemittelverdichter auf. Eine erste Abzweigung nach dem Kältemittelverdichter führt zu einem mit einem Kühlmittelkreislauf zur Kühlung eines Chillers gekoppelten ersten Kühlmittel-Kältemittel-Wärmeübertrager, welcher parallel mit dem äußeren Luft-Kältemittel-Wärmeübertrager fluidverbindbar ist. Eine zweite Abzweigung nach dem ersten Kühlmittel-Kältemittel-Wärmeübertrager führt zu einem zweiten Kühlmittel-Kältemittel-Wärmeübertrager, welcher kühlmittelseitig mit einem Kühlkreislauf zur Kühlung einer elektrischen Antriebsmaschine verbunden ist.

Die Aufgabe der Erfindung besteht darin, eine Kälteanlage mit einem für den AC-Betrieb betreibbaren Kältemittelkreis anzugeben, der einerseits hohe Kälteleistungen bereitstellt, aber andererseits auch über eine hohe (Eigen-) Kühlleistung verfügt, um die zuvor aufgenommene Wärme wieder abzuführen, d. h., der Kältemittelkreis ist sowohl an eine Wärmequelle (Zuluft aus Innenraum, Kühlmedium eines Hochvoltenergiespeichers) als auch an eine Wärmesenke angebunden. Ferner ist es Aufgabe der Erfindung ein Fahrzeug mit einer solchen Kälteanlage zu schaffen.

Die erstgenannte Aufgabe wird gelöst durch eine Kälteanlage mit den Merkmalen des Patentanspruchs 1, die zweitgenannte Aufgabe wird gelöst mit den Merkmalen des Patentanspruchs 4.

Eine Kälteanlage für ein Fahrzeug mit einem für den AC-Betrieb betreibbaren Kältemittelkreislauf umfasst gemäß der erfindungsgemäßen Lösung:
- einen zur Konditionierung eines dem Fahrzeuginnenraum zugeführten Zuluftstroms eingesetzten Verdampfer mit einem demselben zugeordneten Expansionsorgan,
- einen zur Kühlung einer elektrischen Komponente des Fahrzeugs eingesetzten Kühlmittel-Kältemittel-Wärmeübertrager mit einem demselben zugeordneten Expansionsorgan,
- einen Kältemittelverdichter,
- einen Kühlmittel-Kältemittel-Wärmeübertrager als indirekter Kältemittelkondensator oder Gaskühler, welcher kühlmittelseitig mit einem als Hochtemperaturkühler ausgeführten Luft-Kühlmittel-Wärmeübertrager thermisch gekoppelt ist, und
- einen zusätzlichen Kühlmittel-Kältemittel-Wärmeübertrager als indirekter Kältemittelkondensator oder Gaskühler zur Erhöhung der Kondensation- oder Gaskühlleistung bei maximaler Kühlleistung des Kühlmittel-Kältemittel-Wärmeübertragers, welcher kühlmittelseitig mit einem als Niedertemperaturkühler ausgeführten Luft-Kühlmittel-Wärmeübertrager thermisch gekoppelt ist, wobei
- der eine Kühlmittel-Kältemittel-Wärmeübertrager und der zusätzliche Kühlmittel-Kältemittel-Wärmeübertrager in einer Reihenschaltung oder in einer Parallelschaltung fluidverbunden sind, und
- die Reihenschaltung oder die Parallelschaltung des Kühlmittel-Kältemittel-Wärmeübertrager mit dem zusätzlichen Kühlmittel-Kältemittel-Wärmeübertrager mit der Hochdruckseite des Kältemittelverdichters fluidverbunden ist.

Bei dieser erfindungsgemäßen Kälteanlage sind zwei fluidgekühlte indirekte Kondensatoren, die als Kühlmittel-Kältemittel-Wärmeübertrager ausgeführt sind, in einer Reihenschaltung oder in einer Parallelschaltung in dem Kältemittelkreislauf verschaltet. Hierbei ist ein fluidgekühlter Kondensator in einem Hochtemperatur-Kühlkreis mit einem bezüglich des Wärmeflusses nachgeschalteten Luft-Kühlmittel-Wärmeübertrager und der andere fluidgekühlter Kondensator in einem Niedertemperatur-Kühlkreis mit einem weiteren bezüglich des Wärmeflusses nachgeschalteten Luft-Kühlmittel-Wärmeübertrager angeordnet.

Weiterbildungsgemäß zeichnet sich diese Kälteanlage dadurch aus, dass
- der eine Kühlmittel-Kältemittel-Wärmeübertrager und der zusätzliche Kühlmittel-Kältemittel-Wärmeübertrager in einer Reihenschaltung fluidverbunden in einem AC-Zweig angeordnet sind, und
- der AC-Zweig stromaufwärtsseitig mit der Hochdruckseite des Kältemittelverdichters fluidverbunden ist.

Nach einer anderen Weiterbildung der Erfindung zeichnet sich die Kälteanlage dadurch aus, dass
- der eine Kühlmittel-Kältemittel-Wärmeübertrager in einem ersten AC-Zweig angeordnet ist,
- der zusätzliche Kühlmittel-Kältemittel-Wärmeübertrager in einem zweiten AC-Zweig angeordnet ist, und
- die parallel fluidverbundenen AC-Zweige stromaufwärtsseitig mit der Hochdruckseite des Kältemittelverdichters fluidverbunden sind.

Bei dieser erfindungsgemäßen Kälteanlage sind zwei fluidgekühlte indirekte Kondensatoren, die als Kühlmittel-Kältemittel-Wärmeübertrager ausgeführt sind, parallel in dem Kältemittelkreislauf verschaltet. Hierbei ist dem einen fluidgekühlten Kondensator in einem Hochtemperatur-Kühlkreis ein Luft-Kühlmittel-Wärmeübertrager bezüglich des Wärmeflusses nachgeschaltet und dem anderen fluidgekühlten Kondensator in einem Niedertemperatur-Kühlkreis ein weiterer Luft-Kühlmittel-Wärmeübertrager bezüglich des Wärmeflusses stromabwärts nachgeschaltet.

Die erfindungsgemäße Kälteanlage wird in vorteilhafter Weise in Fahrzeugen eingesetzt.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen. Dabei zeigen:
- Figur 1: eine Kälteanlage mit zwei in einem Kältemittelkreislauf seriell angeordneten Luft-Kältemittel-Wärmeübertragern als erstes Ausführungsbeispiel, welches nicht erfindungsgemäß ist und lediglich der Veranschaulichung dient,
- Figur 2: schematische Darstellungen möglicher Anordnungen von zwei Wärmetauschern in einem Fahrzeug, die nicht erfindungsgemäß sind und lediglich der Veranschaulichung dienen,
- Figur 3: eine Kälteanlage mit zwei in einem Kältemittelkreislauf seriell angeordneten Luft-Kältemittel-Wärmeübertragern als zweites Ausführungsbeispiel, welches nicht erfindungsgemäß ist und lediglich der Veranschaulichung dient,
- Figur 4: eine Kälteanlage mit zwei in einem Kältemittelkreislauf parallel angeordneten Luft-Kältemittel-Wärmeübertragern als drittes Ausführungsbeispiel, welches nicht erfindungsgemäß ist und lediglich der Veranschaulichung dient,
- Figur 5: eine Kälteanlage mit zwei in einem Kältemittelkreislauf parallel angeordneten Luft-Kältemittel-Wärmeübertragern als viertes Ausführungsbeispiel, welches nicht erfindungsgemäß ist und lediglich der Veranschaulichung dient,
- Figur 6: eine Kälteanlage mit in einem Kältemittelkreislauf angeordneten äußeren Luft-Kältemittel-Luftwärmeübertrager und einem seriell mit demselben fluidverbundenen Kühlmittel-Kältemittel-Wärmeübertragern als fünftes Ausführungsbeispiel, welches nicht erfindungsgemäß ist und lediglich der Veranschaulichung dient,
- Figur 7: eine Kälteanlage mit in einem Kältemittelkreislauf angeordneten äußeren Luft-Kältemittel-Luftwärmeübertrager und einem seriell mit demselben fluidverbundenen Kühlmittel-Kältemittel-Wärme- übertrager als sechstes Ausführungsbeispiel, welches nicht erfindungsgemäß ist und lediglich der Veranschaulichung dient,
- Figur 8: eine Kälteanlage mit in einem Kältemittelkreislauf angeordneten äußeren Luft-Kältemittel-Luftwärmeübertrager und einem parallel mit demselben fluidverbundenen Kühlmittel-Kältemittel-Wärmeübertrager als siebtes Ausführungsbeispiel, welches nicht erfindungsgemäß ist und lediglich der Veranschaulichung dient
- Figur 9: eine Kälteanlage mit zwei in einem Kältemittelkreislauf seriell angeordneten Kühlmittel-Kältemittel-Wärmeübertragern als achtes Ausführungsbeispiel, und
- Figur 10: eine Kälteanlage mit zwei in einem Kältemittelkreislauf parallel angeordneten Kühlmittel-Kältemittel-Wärmeübertragern als neuntes Ausführungsbeispiel.

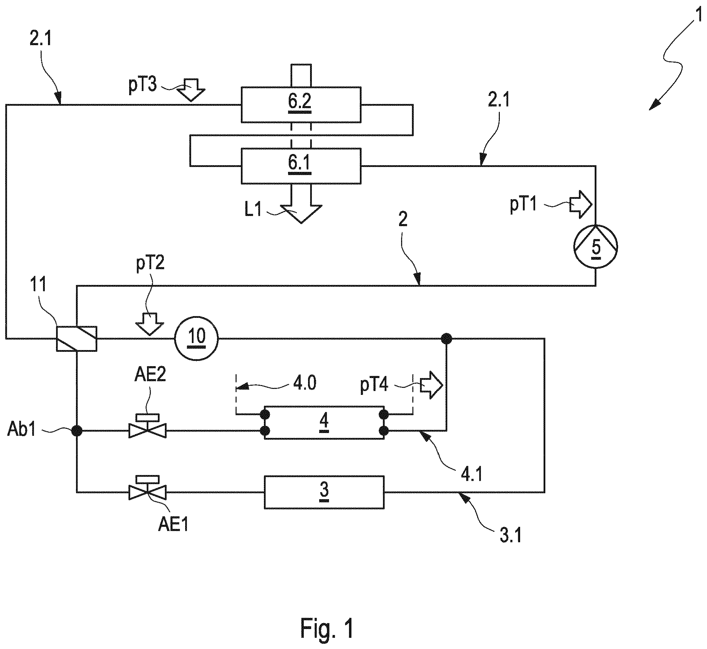

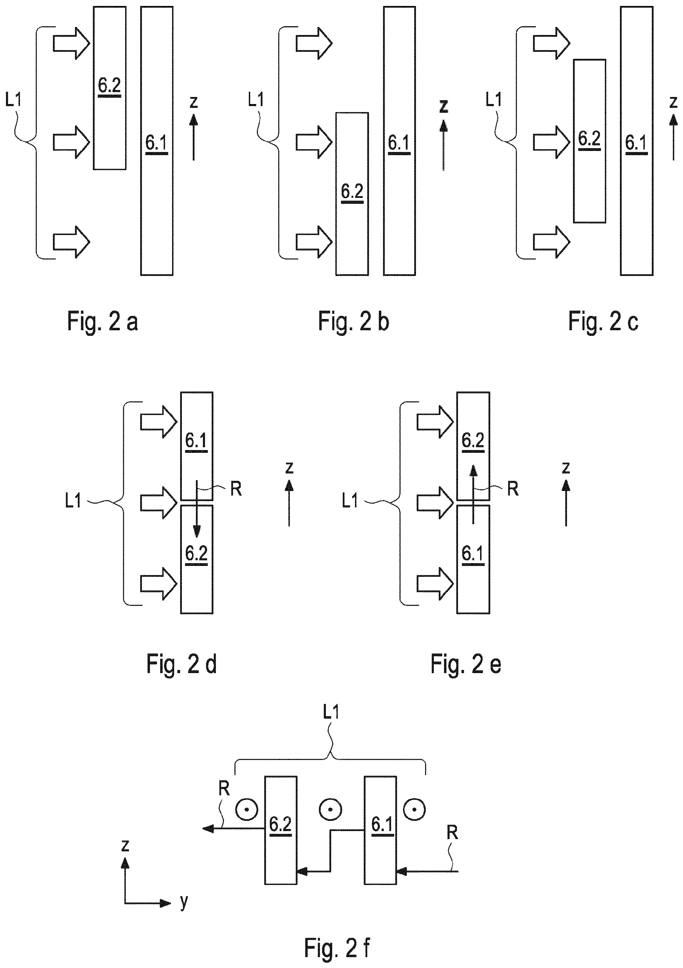

Die Kälteanlage 1 eines Fahrzeugs gemäß den Figuren 1, 3, 4 und 5 weist in einem Kältemittelkreislauf 2 zwei Kältemittelkondensatoren oder Gaskühler auf, nämlich einen ersten äußeren Luft-Kältemittel-Wärmeübertrager 6.1 und einen zweiten äußeren Luft-Kältemittel-Wärmeübertrager 6.2, die in unterschiedlichen Verschaltungen mit dem Hochdruckausgang eines Kältemittelverdichters 5 fluidverbunden und in dem Fahrzeug in unterschiedlichen Konfigurationen (vgl. Figur 2) angeordnet sind.

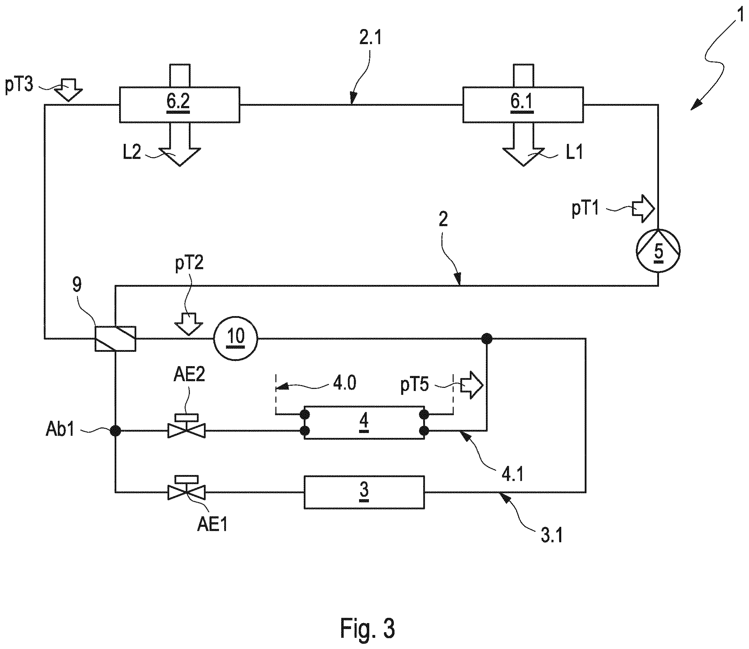

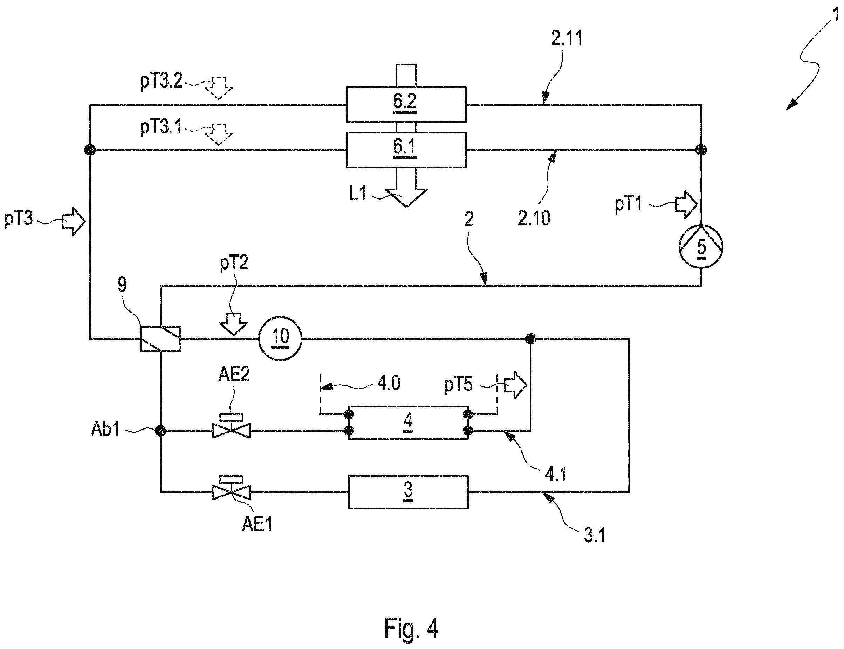

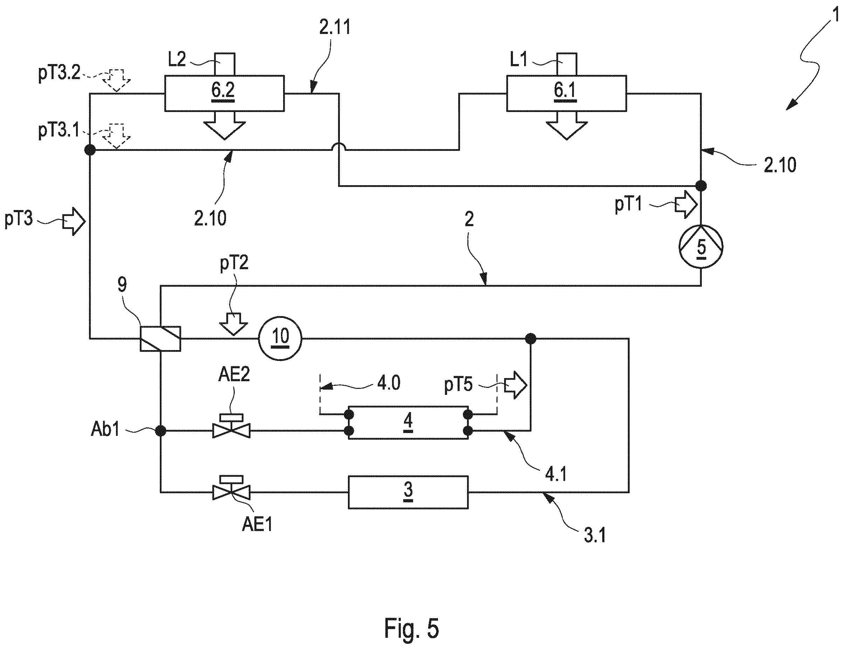

Der Kältemittelkreislauf 2 umfasst gemäß den Figuren 1, 3, 4 und 5 neben dem Kältemittelverdichter 5 einen in einem Verdampferzweig 3.1 angeordneten Verdampfer 3 mit zugehörigem Expansionsorgan AE1 und einen in einem Chillerzweig 4.1 angeordneten Kühlmittel-Kältemittel-Wärmeübertrager 4 als Chiller mit einem zugehörigen Expansionsorgan AE2. Der Chiller dient der Konditionierung und Temperierung eines als Traktionsbatterie für ein Elektro- oder Hybridfahrzeug realisierten Energiespeichers. Der Verdampferzweig 3.1 und der Chillerzweig 4.1 sind parallel fluidverbunden, so dass das Kältemittel des Kältemittelkreislaufs 2 stromabwärts dieser beiden Komponenten 3 und 4 über einen Niederdruck-Kältemittelsammler 10 und einem Niederdruckabschnitt eines inneren Wärmeübertragers 11 dem Niederdruckeingang des Kältemittelverdichters 5 zugeführt wird. Stromaufwärts wird die Parallelschaltung des Verdampferzweiges 3.1 und des Chillerzweiges 4.1 über den Hochdruckabschnitt des inneren Wärmeübertragers 11 mit einem AC-Zweig 2.1 gemäß den Figuren 1 und 3 oder mit einem ersten AC-Zweig 2.10 und mit einem zweiten AC-Zweig 2.11 gemäß den Figuren 4 und 5 fluidverbunden.

Die beiden äußeren Luft-Kältemittel-Wärmeübertrager 6.1 und 6.2 sind in dem AC-Zweig 2.1 des Kältemittelkreislaufes 2 gemäß den Figuren 1 und 3 seriell verschaltet, so dass der erste äußere Luft-Kältemittel-Wärmeübertrager 6.1 mit dem Hochdruckausgang des Kältemittelverdichters 5 fluidverbunden ist und demselben der zweite äußere Luft-Kältemittel-Wärmeübertrager 6.2 stromabwärts nachgeschaltet ist.

Diese beiden Luft-Kältemittel-Wärmeübertrager 6.1 und 6.2 sind luftseitig in dem Fahrzeug derart hintereinander, also seriell angeordnet, dass zunächst der zweite äußere Luft-Kältemittel-Wärmeübertrager 6.2 von einem äußeren Luftstrom L1 und anschließend der erste äußere Luft-Kältemittel-Wärmeübertrager 6.1 von diesem Luftstrom L1 beaufschlagt wird, wie dies schematisch in Figur 1 dargestellt ist. Somit erfolgt die Kältemittel-Luft-Durchströmung der beiden Luft-Kältemittel-Wärmeübertrager 6.1 und 6.2 im Gegenstromverfahren. Die beiden Luft-Kältemittel-Wärmeübertrager 6.1 und 6.2 können jeweils als einzelne Komponente oder in einer einzigen Komponente aufgebaut werden. Es ist auch möglich den zweiten Luft-Kältemittel-Wärmeübertrager 6.2 luftseitig hinter dem ersten Luft-Kältemittel-Wärmeübertrager 6.1 anzuordnen, was jedoch aus Leistungsgründen des Systems sich als unvorteilhaft erweist.

Weitere Anordnungen dieser beiden Luft-Kältemittel-Wärmeübertrager 6.1 und 6.2 in einem Fahrzeug sind in Figur 2 dargestellt.

Bei der Anordnung der beiden Luft-Kältemittel-Wärmeübertrager 6.1 und 6.2 gemäß den Figuren 2a), 2b) und 2c) sind dieselben luftseitig entsprechend von Figur 1 in dem Fahrzeug angeordnet, jedoch weist der zweite äußere Luft-Kältemittel-Wärmeübertrager 6.2 in Fahrzeughochrichtung (z-Richtung) eine geringere Bauhöhe auf als der erste äußere Luft-Kältemittel-Wärmeübertrager 6.1. Nach Figur 2a) bzw. Figur 2b) fluchtet der zweite äußere Luft-Kältemittel-Wärmeübertrager 6.2 in Fahrzeughochrichtung gesehen mit der oberen bzw. unteren Kante des ersten äußeren Luft-Kältemittel-Wärmeübertragers 6.1. Durch den frei werdenden Bauraum in der Ebene des zweiten äußeren Luft-Kältemittel-Wärmeübertragers 6.2 können weitere Kühler des Fahrzeugs angeordnet werden.

Bei der Anordnung nach Figur 2c) ist der zweite äußere Luft-Kältemittel-Wärmeübertrager 6.2 mit der im Vergleich zum ersten äußeren Luft-Kältemittel-Wärmeübertrager 6.1 geringeren Bauhöhe mittig oder beliebig zum ersten äußeren Luft-Kältemittel-Wärmeübertrager 6.1 bezüglich dessen Bauhöhe in Fahrzeughochrichtung platziert.

Bei der Anordnung der beiden Luft-Kältemittel-Wärmeübertrager 6.1 und 6.2 gemäß den Figuren 2d) und 2e) sind diese in Fahrzeughochrichtung (z-Richtung) im Fahrzeug übereinander angeordnet, so dass diese luftseitig von einem Luftstrom L1 parallel durchströmt werden. Nach Figur 2d) ist der erste äußere Luft-Kältemittel-Wärmeübertrager 6.1 oberhalb des zweiten äußeren Luft-Kältemittel-Wärmeübertragers 6.2, gemäß Figur 2e) jedoch unterhalb des zweiten äußeren Luft-Kältemittel-Wärmeübertragers 6.2 angeordnet. Gemäß des Pfeils R wird in der Anordnung nach Figur 2d) und Figur 2e) zunächst der erste äußere Luft-Kältemittel-Wärmeübertrager 6.1 von Kältemittel durchströmt und anschließend der zweite äußere Luft-Kältemittel-Wärmeübertrager 6.2.

Bei der Anordnung der beiden Luft-Kältemittel-Wärmeübertrager 6.1 und 6.2 nach Figur 2f) sind dieselben in Fahrzeugquerrichtung (y-Richtung) nebeneinander in der y-z-Ebene angeordnet und werden somit ebenso luftseitig parallel von einem Luftstrom durchströmt. Ferner wird auch bei dieser Anordnung zunächst der erste äußere Luft-Kältemittel-Wärmeübertrager 6.1 und anschließend der zweite äußere Luft-Kältemittel-Wärmeübertrager 6.2 mit Kältemittel (vgl. Richtungspfeile R) durchströmt.

Schließlich sind auch in dem Kältemittelkreislauf 2 der Kälteanlage 1 gemäß Figur 3 die beiden äußeren Luft-Kältemittel-Wärmeübertrager 6.1 und 6.2 seriell in dem AC-Zweig 2.1 angeordnet. Mit der speziellen beabstandeten Darstellung dieser beiden Luft-Kältemittel-Wärmeübertrager 6.1 und 6.2 in Figur 3 wird die Anordnung derselben in einer vorderen Schürze im Bereich eines linken Lufteinlasses und eines rechten Lufteinlasses angezeigt. Damit wird bspw. der erste äußere Luft-Kältemittel-Wärmeübertragers 6.1 von einem ersten Luftstrom L1 im Bereich der rechten Seite des Fahrzeugs beaufschlagt, während der zweite äußere Luft-Kältemittel-Wärmeübertrager 6.2 von einem zweiten Luftstrom L2 im Bereich der linken Seite des Fahrzeugs beaufschlagt wird oder umgekehrt.

In ähnlicher Weise können die beiden äußeren Luft-Kältemittel-Wärmeübertragers 6.1 und 6.2 auch in Lufteinlässen im Hinterwagen des Fahrzeugs, bspw. bei Fahrzeugen mit Mittel- oder Heckmotor angeordnet werden.

Gemäß den Figuren 4 und 5 sind die beiden äußeren Luft-Kältemittel-Wärmeübertrager 6.1 und 6.2 in einem ersten AC-Zweig 2.10 und in einem zweiten AC-Zweig 2.11 angeordnet, wobei diese beiden AC-Zweige 2.10 und 2.11 parallel fluidverbunden sind. In der Anordnung der beiden äußeren Luft-Kältemittel-Wärmeübertrager 6.1 und 6.2 nach Figur 4 sind dieselben luftseitig von einem Luftstrom L1 seriell durchströmt, wobei zunächst der zweite äußere Luft-Kältemittel-Wärmeübertrager 6.2 und anschließend der erste äußere Luft-Kältemittel-Wärmeübertrager 6.1 von dem Luftstrom L1 beaufschlagt wird. Es ist auch möglich den zweiten Luft-Kältemittel-Wärmeübertrager 6.2 luftseitig hinter dem ersten Luft-Kältemittel-Wärmeübertrager 6.1 anzuordnen.

Auch bei dieser kältemittelseitig parallelen Anordnung der beiden äußeren Luft-Kältemittel-Wärmeübertragers 6.1 und 6.2 ist eine Ausgestaltung des zweiten äußeren Luft-Kältemittel-Wärmeübertrager 6.2 entsprechend den Figuren 2a) bis 2c) möglich, wonach der zweite äußere Luft-Kältemittel-Wärmeübertrager 6.2 im Vergleich zum ersten äußeren Luft-Kältemittel-Wärmeübertrager 6.1 in Fahrzeughochrichtung (z-Richtung) gesehen eine geringere Bauhöhe aufweist. ferner ist es auch möglich diese beiden äußeren Luft-Kältemittel-Wärmeübertrager 6.1 und 6.2 ebenso in Fahrzeughochrichtung (z-Richtung) gesehen übereinander entsprechend den Darstellungen nach Figur 2d) und 2e) oder nebeneinander nach Figur 2f) anzuordnen.

Schließlich sind auch in dem Kältemittelkreislauf 2 der Kälteanlage 1 die beiden äußeren Luft-Kältemittel-Wärmeübertrager 6.1 und 6.2 gemäß Figur 5 parallel mittels der beiden AC-Zweige 2.10 und 2.11 angeordnet. Mit der speziellen beabstandeten Darstellung dieser beiden Luft-Kältemittel-Wärmeübertrager 6.1 und 6.2 in Figur 5 wird die Anordnung derselben in einer vorderen Schürze im Bereich eines linken Lufteinlasses und rechten Lufteinlasses angezeigt. Damit wird bspw. der erste äußere Luft-Kältemittel-Wärmeübertragers 6.1 von einem ersten Luftstrom L1 im Bereich der rechten Seite des Fahrzeugs beaufschlagt, während der zweite äußere Luft-Kältemittel-Wärmeübertrager 6.2 von einem zweiten Luftstrom L2 im Bereich der linken Seite des Fahrzeugs beaufschlagt wird oder umgekehrt.

In ähnlicher Weise können die beiden äußeren Luft-Kältemittel-Wärmeübertrager 6.1 und 6.2 auch in Lufteinlässen im Hinterwagen des Fahrzeugs, bspw. bei Fahrzeugen mit Mittel- oder Heckmotor angeordnet werden.

Der zusätzliche Luft-Kältemittel-Wärmeübertrager 6.2 des Kältemittelkreislaufes 2 gemäß den Figuren 1, 3, 4 und 5 kann permanent durchströmt werden oder mittels einer Bypassleitung und einem geeigneten Ventilorgan situativ umströmt werden. Bei einer kältemittelseitigen Abschaltung ist es auch möglich, eine steuerbare luftseitige Verschließung zu realisieren.

Auch bei den Varianten der parallelen Anordnung der Luft-Kältemittel-Wärmeübertrager 6.1 und 6.2 gemäß den Figuren 4 und 5 kann durch zusätzlich Berücksichtigung von Ventilen stromauf und -abwärts der jeweiligen Wärmeübertrager nur eine Teilbeaufschlagung dieser Luft-Kältemittel-Wärmeübertrager 6.1. und/ oder 6.2 mit Kältemittel erfolgen.

Als Sensoren sind in dem Kältemittelkreislauf 2 gemäß den Figuren 1, 3, 4 und 5 zur Steuerung und Regelung des Systems mehrere Druck-Temperatursensoren vorgesehen.

So ist dem Kältemittelverdichter 5 ein erster Druck-Temperatursensor pT1 am Hochdruckausgang zugeordnet, ferner ein zweiter Druck-Temperatursensor pT2 am Ausgang des Niederdruck-Kältemittelsammlers 10, ein dritter Druck-Temperatursensor pT3 am Ausgang des zweiten äußeren Luft-Kältemittel-Wärmeübertragers 6.2 gemäß den Figuren 1 und 3 oder stromabwärts nach der Parallelschaltung der beiden AC-Zweige 2.10 und 2.11 und schließlich ein vierter Druck-Temperatursensor pT4 am niederdruckseitigen Ausgang des Kühlmittel-Kältemittel-Wärmeübertragers 4 angeordnet. Alternativ zu dem Druck-Temperatursensor pT3 bei dem Kältemittelkreislauf 2 gemäß den Figu-ren 3 und 4 können ein Druck-Temperatursensor pT3.1 in dem ersten AC-Zweig 2.10 und ein Druck-Temperatursensor pT3.2 in dem zweiten AC-Zweig 2.11 eingesetzt werden.

Der erste Druck-Temperatursensor pT1 des Kältemittelkreislaufs 2 dient zur Bestimmung der Kältemitteltemperatur sowie des Hochdrucks des verdichteten Mediums am Austritt des Kältemittelverdichters 5. Die Detektion dieser beiden Größen dient dazu, die maximal zulässigen mechanischen und thermischen Belastungen der Kälteanlage speziell am Austritt des Kältemittelverdichters 5 zu überwachen und ggf. durch Abregelungsmaßnahmen, eingefordert durch ein Steuergerät, bspw. einem Klimasteuergerät, den Systembetrieb zu limitieren, um die zulässigen Höchstwerte nicht zu überschreiten.

Der zweite Druck-Temperatursensor pT2 des Kältemittelkreislaufs 2 dient zur Unterfüllungserkennung, aber auch zur Einstellung und Überwachung eines geforderten Niederdrucks.

Der an der Austrittsseite des zweiten äußeren Luft-Kältemittel-Wärmeübertragers 6.2 vorgesehene dritte Druck-Temperatursensor pT3 des Kältemittelkreislaufs 2 gemäß den Figuren 1 und 3 dient primär zur Einstellung bzw.

Überwachung der Systembetriebsgrößen "optimaler Hochdruck" bei überkritischem Systembetrieb bzw. "Unterkühlung nach dem zweiten äußeren Luft-Kältemittel-Wärmeübertrager 6.2" bei unterkritischem Systembetrieb. Gleiches gilt für den der Parallelschaltung der beiden Luft-Kältemittel-Wärmeübertrager 6.1 und 6.2 vorgesehene dritte Druck-Temperatursensor pT3 des Kältemittelkreislaufes 2 gemäß den Figuren 4 und 5, ebenso für die alternativen Druck-Temperatursensoren pT3.1 und pT3.2.

Der vierte Druck-Temperatursensor pT4 des Kältemittelkreislaufs 2 dient der Überwachung und Regelung des Überhitzungsgrades am Austritt des als Chiller eingesetzten Kühlmittel-Kältemittel-Wärmeübertragers 4.

Bei diesem Kältemittelkreislauf 2 gemäß den Figuren 1, 3, 4 und 5 wird mit dem zusätzlichen äußeren Luft-Kältemittel-Wärmeübertrager 6.2 eine erhöhte Kondensations- oder Gaskühlleistung erzeugt, die bei einer hohen maximalen Batteriekühlleistung des Kühlmittel-Kältemittel-Wärmeübertrager 4 als Chiller und gegebenenfalls auch bei einer hieran angepassten vergrößerten Verdichterleistung des Kältemittelverdichters 5 erforderlich ist.

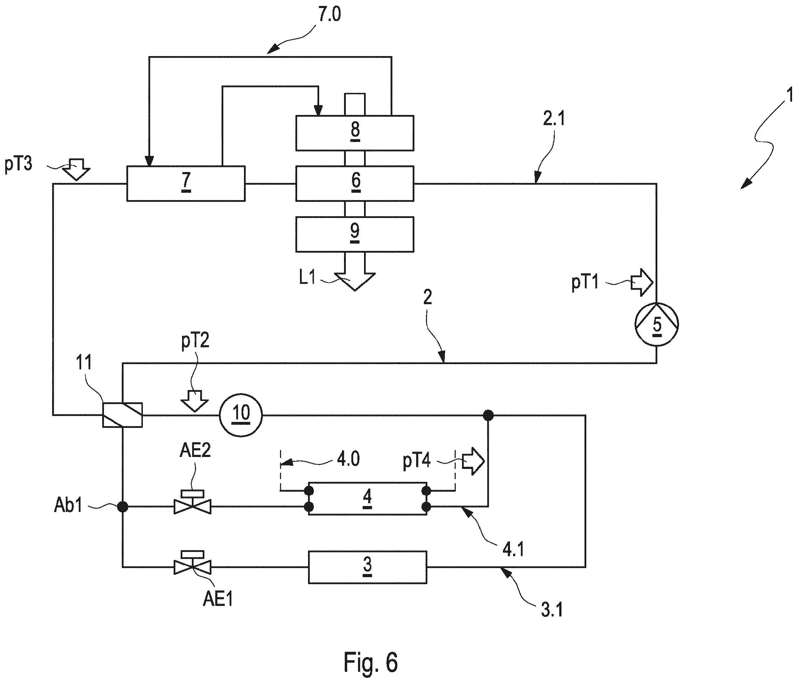

Die Kälteanlage 1 eines Fahrzeugs gemäß den Figuren 6, 7 und 8 weist in einem Kältemittelkreislauf 2 einen luftgekühlten Kältemittelkondensator oder Gaskühler und einen fluidgekühlten Kältemittelkondensator oder Gaskühler auf, nämlich einen äußeren Luft-Kältemittel-Wärmeübertrager 6 und einen Kühlmittel-Kältemittel-Wärmeübertrager 7 als indirekten Kältemittelkondensator oder Gaskühler, die in unterschiedlichen Verschaltungen mit dem Hochdruckausgang eines Kältemittelverdichters 5 fluidverbunden sind.

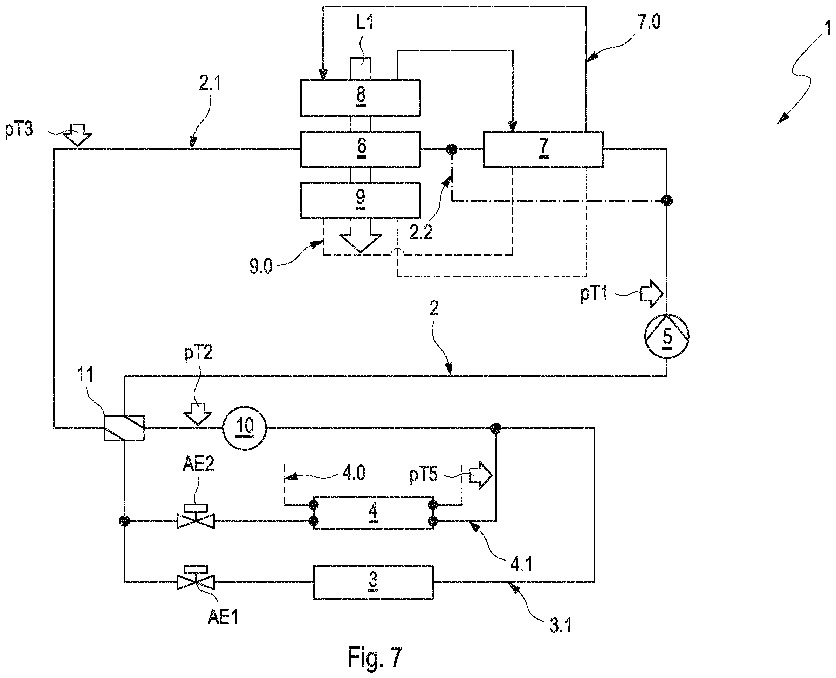

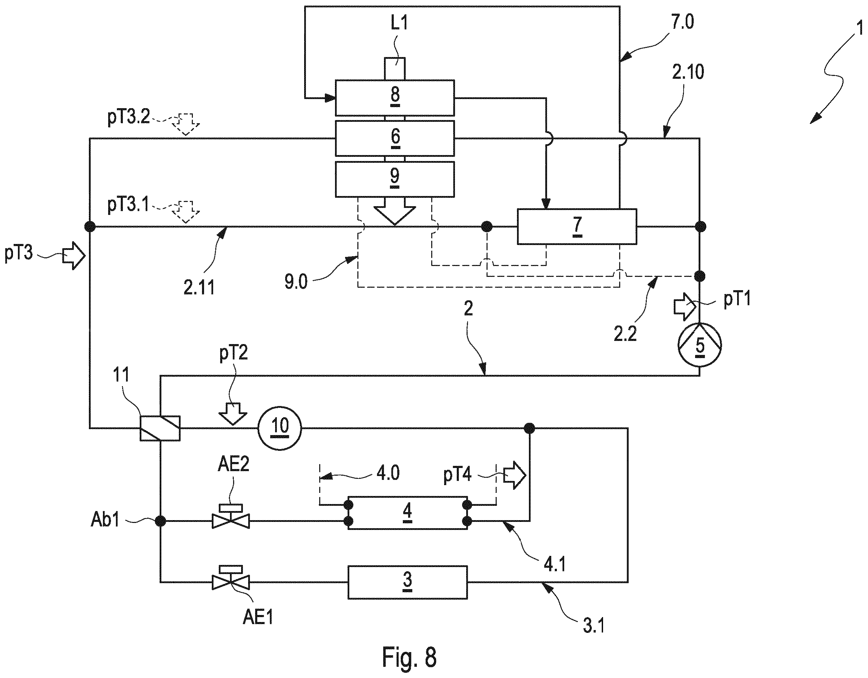

Der Kältemittelkreislauf 2 umfasst gemäß den Figuren 6, 7 und 8 neben dem Kältemittelverdichter 5 einen in einem Verdampferzweig 3.1 angeordneten Verdampfer 3 mit zugehörigem Expansionsorgan AE1 und einen in einem Chillerzweig 4.1 angeordneten Kühlmittel-Kältemittel-Wärmeübertrager 4 als Chiller mit einem zugehörigen Expansionsorgan AE2. Der Verdampferzweig 3.1 und der Chillerzweig 4.1 sind parallel fluidverbunden, so dass das Kältemittel des Kältemittelkreislaufs 2 stromabwärts dieser beiden Komponenten 3 und 4 über einen Niederdruck-Kältemittelsammler 10 und einem Niederdruckabschnitt eines inneren Wärmeübertragers 11 dem Niederdruckeingang des Kältemittelverdichters 5 zugeführt wird. Stromaufwärts wird die Parallelschaltung des Verdampferzweiges 3.1 und des Chillerzweiges 4.1 über den Hochdruckabschnitt des inneren Wärmeübertragers 11 mit einem AC-Zweig 2.1 gemäß den Figuren 6 und 7 oder mit einem ersten AC-Zweig 2.10 und mit einem zweiten AC-AC Zweig 2.11 gemäß Figur 8 fluidverbunden.

Der äußere Luft-Kältemittel-Wärmeübertrager 6 als Kältemittelkondensator oder Gaskühler und der Kühlmittel-Kältemittel-Wärmeübertrager 7 als indirekter Kältemittelkondensator oder indirekter Gaskühler sind in dem AC-Zweig 2.1 des Kältemittelkreislaufes 2 gemäß Figur 6 seriell fluidverbunden, so dass der äußere Luft-Kältemittel-Wärmeübertrager 6 mit dem Hochdruckausgang des Kältemittelverdichters 5 fluidverbunden ist und demselben der Kühlmittel-Kältemittel-Wärmeübertrager 7 stromabwärts nachgeschaltet ist.

Der Kühlmittel-Kältemittel-Wärmeübertrager 7 ist in einen Niedertemperaturkreislauf 7.0 eines als Niedertemperaturkühler ausgebildeten Luft-Kühlmittel-Wärmeübertragers 8 eingebunden. Damit wird die Abwärme aus dem Kühlmittel-Kältemittel-Wärmeübertrager 7 zunächst auf das Kühlmittel des Niedertemperaturkreislaufs 7.0 und von diesem mittels des Luft-Kühlmittel-Wärmeübertragers 8 auf einen Luftstrom L1 übertragen. Hinsichtlich der Richtung des Wärmeflusses ist damit der Luft-Kühlmittel-Wärmeübertrager 8 dem Kühlmittel-Kältemittel-Wärmeübertrager 7 nachgeschaltet.

Wird bei dem Kältemittelkreislauf 2 gemäß Figur 6 dem äußeren Luft-Kältemittel-Kondensator 6 als erster Kondensator bzw. Gaskühler der Kühlmittel-Kältemittel-Wärmeübertrager 7 als zweiter Kondensator bzw. Gaskühler nachgeschaltet, kann dieser Kühlmittel-Kältemittel-Wärmeübertrager 7 entweder permanent durchströmt werden oder mittels einer Bypassleitung und einem geeigneten Ventilorgan situativ umströmt werden. Es ist auch eine Abschaltung einer in dem Niedertemperaturkreislauf 7.0 vorgesehenen Pumpe möglich, sofern es nicht zum Sieden des im Kühlmittel-Kältemittel-Wärmeübertrager 7 bestehenden Kühlmittels kommt.

Die Kälteanlage 1 gemäß Figur 6 weist auch einen als Hochtemperaturkühler ausgeführten weiteren Luft-Kühlmittel-Wärmeübertrager 9 auf, der dazu dient die Wärme von Bauteilen, die auf höherem Temperaturniveau arbeiten können, wie bspw. ein elektrischer Motor oder bei PHEV-Fahrzeugen ggf. auch ein Verbrennungsmotor, an die Umgebungsluft bzw. den Umgebungsluftstrom L1 übertragen zu können.

Auch bei dem Kältemittelkreislauf 2 gemäß Figur 7 sind der äußere Luft-Kältemittel-Wärmeübertrager 6 und der Kühlmittel-Kältemittel-Wärmeübertrager 7 als indirekter Kältemittelkondensator oder indirekter Gaskühler in dem AC-Zweig 2.1 seriell fluidverbunden, jedoch im Vergleich zu der Anordnung nach Figur 6 in umgekehrter Reihenfolge, so dass der Kühlmittel-Kältemittel-Wärmeübertrager 7 mit dem Hochdruckausgang des Kältemittelverdichters 5 fluidverbunden ist und demselben der äußere Luft-Kältemittel-Wärmeübertrager 6 stromabwärts nachgeschaltet ist.

Auch dieser Kühlmittel-Kältemittel-Wärmeübertrager 7 des Kältemittels 2 nach Figur 7 ist in einen Niedertemperaturkreislauf 7.0 eines als Niedertemperaturkühler ausgebildeten Luft-Kühlmittel-Wärmeübertragers 8 eingebunden. Damit wird die Abwärme aus dem Kühlmittel-Kältemittel-Wärmeübertrager 7 zunächst auf das Kühlmittel des Niedertemperaturkreislaufs 7.0 und von diesem mittels des Luft-Kühlmittel-Wärmeübertragers 8 auf einen Luftstrom L1 übertragen. Hinsichtlich der Richtung des Wärmeflusses ist damit der Luft-Kühlmittel-Wärmeübertrager 8 dem Kühlmittel-Kältemittel-Wärmeübertrager 7 nachgeschaltet.

Wird bei dem Kältemittelkreislauf 2 gemäß Figur 7 dem mit dem Luft-Kühlmittel-Wärmeübertrager 8 thermisch gekoppelten Kühlmittel-Kältemittel-Wärmeübertrager 7 als erster Kondensator bzw. Gaskühler und der Luft-Kältemittel-Wärmeübertrager 6 als zweiter Kondensator bzw. Gaskühler nachgeschaltet, kann dieser Luft-Kältemittel-Wärmeübertrager 6 entweder permanent durchströmt werden oder mittels einer Bypassleitung und einem geeigneten Ventilorgan situativ umströmt werden. Bei einer kältemittelseitigen Abschaltung ist es auch möglich, eine steuerbare luftseitige Verschließung zu realisieren.

Der Kühlmittel-Kältemittel-Wärmeübertrager 7 kann anstelle einer thermischen Kopplung mit dem als Niedertemperaturkühler ausgeführten Luft-Kühlmittel-Wärmeübertrager 8 auch mit einem als Hochtemperaturkühler ausgeführten Luft-Kühlmittel-Wärmeübertrager 9 über einen schematisch angedeuteten Hochtemperaturkreislauf 9.0 thermisch gekoppelt werden. In diesem Fall ist idealerweise zusätzlich eine den Kühlmittel-Kältemittel-Wärmeübertrager 7 umströmende Bypassleitung 2.2 (in Figur 7 gestrichelt dargestellt) mit einem entsprechenden Ventilorgan vorgesehen, so dass im Falle des Auftretens einer Temperatur in dem Hochtemperaturkreislauf, die größer als die Temperatur des Kältemittels ist, eine weitere Erwärmung des Kältemittels vermieden wird. Alternativ kann der Kühlmittel-Kältemittel-Wärmeübertrager 7 auch wasserseitig gebypasst werden bzw. es wird stehendes Wasser im Kühlmittel-Kältemittel-Wärmeübertrager 7 sichergestellt , um einen Wärmeübertrag ins Kältemittel zu unterbinden. Die Situation "siedendes Wasser" ist in einer solchen Situation zu berücksichtigen.

Bei dem Kältemittelkreislauf gemäß den Figuren 6 und 7 ist der äußere Luft-Kältemittel-Wärmeübertrager 6 luftseitig zwischen dem Luft-Kühlmittel-Wärmeübertrager 8 und dem Luft-Kühlmittel-Wärmeübertrager 9 angeordnet, so dass zunächst der Niedertemperaturkühler, anschließend der Luft-Kältemittel-Wärmeübertragers 6 und schließlich der Hochtemperaturkühler mit einem Luftstrom L1 beaufschlagt werden.

Der Kältemittelkreislauf 2 der Kälteanlage 1 gemäß Figur 8 weist ebenso einen äußeren Luft-Kältemittel-Wärmeübertrager 6 sowie einen Kühlmittel-Kältemittel-Wärmeübertrager 7 als indirekter Kältemittelkondensator oder indirekter Gaskühler auf, die jedoch im Gegensatz zu dem Kältemittelkreislauf 2 nach Figur 6 und Figur 7 nicht seriell, sondern parallel fluidverbunden sind. Hierzu ist der äußere Luft-Kältemittel-Wärmeübertrager 6 in einem ersten AC-Zweig 2.10 und der Kühlmittel-Kältemittel-Wärmeübertrager 7 in einem zweiten AC-Zweig 2.11 angeordnet, wobei diese beiden AC-Zweige 2.10 und 2.11 parallel fluidverbunden sind und stromaufwärts mit dem Hochdruckausgang des Kältemittelverdichters 5 und stromabwärts über den Hochdruckabschnitt des inneren Wärmeübertragers 11 mit den parallel verschalteten Verdampferzweig 3.1 und Chillerzweig 4.1 fluidverbunden sind.

Gemäß den Figuren 6, 7 und 8 kann der Luft-Kühlmittel-Wärmeübertrager 8 anstelle einer luftseitigen Anordnung vor dem äußeren Luft-Kältemittel-Wärmeübertrager 6 auch direkt danach, unterhalb, oberhalb oder seitlich in einer der beiden Schürzen des Fahrzeugs angeordnet werden.

Bei dem Kältemittelkreislauf 2 gemäß Figur 8 ist der Kühlmittel-Kältemittel-Wärmeübertrager 7 in einen Niedertemperaturkreislauf 7.0 eines als Niedertemperaturkühler ausgeführten Luft-Kühlmittel-Wärmeübertragers 8 eingebunden. Hierbei sind der Luft-Kühlmittel-Wärmeübertrager 8 und der äußere Luft-Kältemittel-Wärmeübertrager 6 luftseitig hintereinander in dem Fahrzeug angeordnet, so dass zunächst der Luft-Kühlmittel-Wärmeübertrager 8 und anschließend der äußere Luft-Kältemittel-Wärmeübertrager 6 von einem Luftstrom L1 durchströmt werden.

Der Kühlmittel-Kältemittel-Wärmeübertrager 7 kann anstelle einer thermischen Kopplung mit dem als Niedertemperaturkühler ausgeführten Luft-Kühlmittel-Wärmeübertrager 8 auch mit einem als Hochtemperaturkühler ausgeführten Luft-Kühlmittel-Wärmeübertrager 9 über einen Hochtemperaturkreislauf 9.0 thermisch gekoppelt werden. In diesem Fall ist eine den Kühlmittel-Kältemittel-Wärmeübertrager 7 umströmende Bypassleitung 2.2 (in Figur 8 gestrichelt dargestellt) mit einem entsprechenden Ventilorgan vorgesehen, um im Falle des Auftretens einer Temperatur in dem Hochtemperaturkreislauf, die größer als die Temperatur des Kältemittels ist, eine weitere Erwärmung des Kältemittels zu vermeiden.

Der Luft-Kühlmittelwärmeübertrager 8 ist luftseitig hinter dem äußeren Luft-Kältemittel-Wärmeübertrager 6 angeordnet. Alternativ kann anstelle eines Bypasses 2.2 um den Kühlmittel-Kältemittel-Wärmeübertrager 7 der gesamte zweite AC-Zweig 2.11 gesperrt werden und damit das Kältemittel vollständig über den ersten AC-Zweig 2.10 und den Luft-Kältemittel-Wärmeübertrager 6 zu führen. Entsprechende Absperr- oder Umschaltventile sowie Rückschlagventile sind vorzusehen.

Bei diesem Kältemittelkreislauf 2 gemäß den Figuren 6, 7 und 8 wird mit dem zusätzlichen Kühlmittel-Kältemittel-Wärmeübertrager 7 eine erhöhte Kondensations- oder Gaskühlleistung erzeugt, die bei einer hohen maximalen Batteriekühlleistung des Kühlmittel-Kältemittel-Wärmeübertrager 4 als Chiller und gegebenenfalls auch bei einer hieran angepassten vergrößerten Verdichterleistung des Kältemittelverdichters 5 erforderlich ist.

Als Sensoren sind in dem Kältemittelkreislauf 2 gemäß den Figuren 6, 7 und 8 zur Steuerung und Regelung des Systems mehrere Druck-Temperatursensoren vorgesehen.

So ist dem Kältemittelverdichter 5 ein erster Druck-Temperatursensor pT1 am Hochdruckausgang zugeordnet, ferner ein zweiter Druck-Temperatursensor pT2 am Ausgang des Niederdruck-Kältemittelsammlers 10, ein dritter Druck-Temperatursensor pT3 am Ausgang des indirekten Kühlmittel-Kältemittel-Wärmeübertragers 7 gemäß Figur 6 bzw. am Ausgang des Luft-Kältemittel-Wärmeübertragers 6 gemäß Figur 7 und schließlich ein vierter Druck-Temperatursensor pT4 am niederdruckseitigen Ausgang des Kühlmittel-Kältemittel-Wärmeübertragers 4 angeordnet. Die Funktion dieser Druck-Temperatursensoren ist mit denjenigen identisch, die im Zusammenhang mit dem Kältemittelkreislauf 2 gemäß den Figuren 1, 3, 4 und 5 erläutert wurden.

Für eine Verschaltung gemäß Figur 8 sind entweder jedem der Wärmeübertrager 6 und 7 eigene Sensoren pT3.1 und pT3.2 nachgeschaltet oder es wird stromabwärts der Zusammenführung der beiden AC-Zweige 2.10 und 2.11 ein gemeinsamer Sensor pT3 angeordnet.

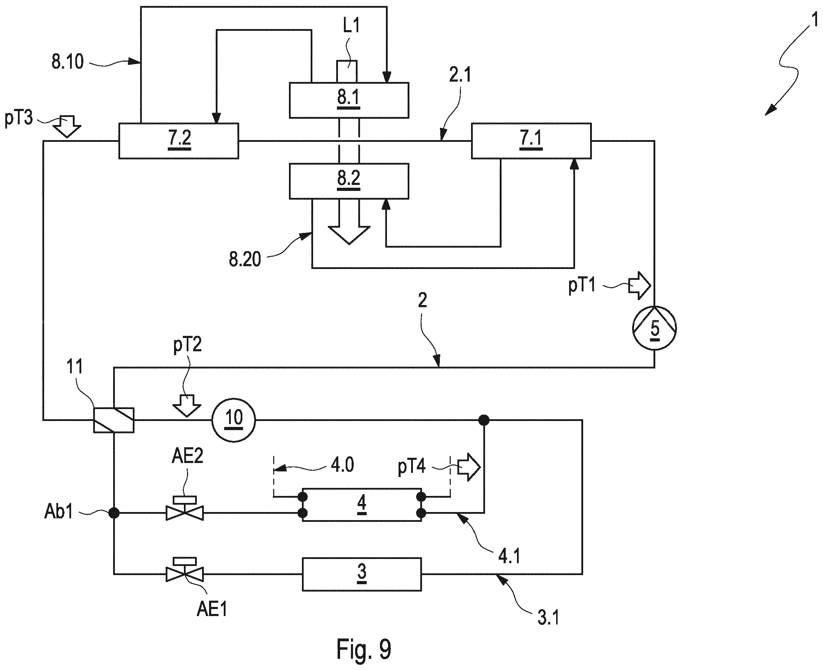

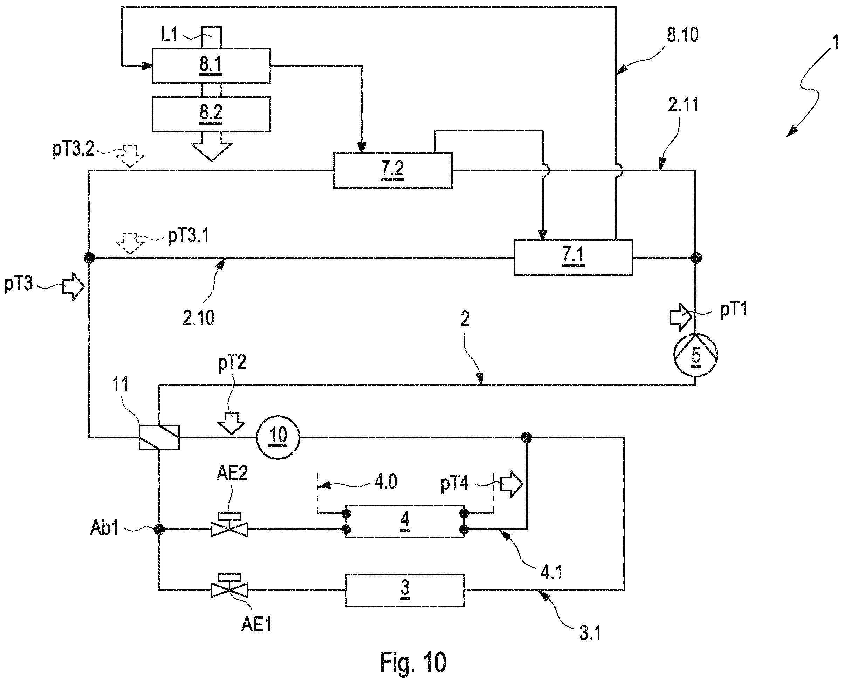

Die Kälteanlage 1 eines Fahrzeugs gemäß den Figuren 9 und 10 weist in einem Kältemittelkreislauf 2 zwei fluidgekühlte indirekte Kältemittelkondensatoren bzw. Gaskühler auf, nämlich einen Kühlmittel-Kältemittel-Wärmeübertrager 7.1 und einen zusätzlichen Kühlmittel-Kältemittel-Wärmeübertrager 7.2, die in unterschiedlichen Verschaltungen mit dem Hochdruckausgang eines Kältemittelverdichters 5 fluidverbunden sind.

Der Kältemittelkreislauf 2 umfasst gemäß den Figuren 9 und 10 neben dem Kältemittelverdichter 5 einen in einem Verdampferzweig 3.1 angeordneten Verdampfer 3 mit zugehörigem Expansionsorgan AE1 und einen in einem Chillerzweig 4.1 angeordneten Kühlmittel-Kältemittel-Wärmeübertrager 4 als Chiller mit einem zugehörigen Expansionsorgan AE2. Der Verdampferzweig 3.1 und der Chillerzweig 4.1 sind parallel fluidverbunden, so dass das Kältemittel des Kältemittelkreislaufs 2 stromabwärts dieser beiden Komponenten 3 und 4 über einen Niederdruck-Kältemittelsammler 10 und einem Niederdruckabschnitt eines inneren Wärmeübertragers 11 dem Niederdruckeingang des Kältemittelverdichters 5 zugeführt wird. Stromaufwärts wird die Parallelschaltung des Verdampferzweiges 3.1 und des Chillerzweiges 4.1 über den Hochdruckabschnitt des inneren Wärmeübertragers 11 mit einem AC-Zweig 2.1 gemäß Figur 9 oder mit einem ersten AC-Zweig 2.10 und mit einem zweiten AC-Zweig 2.11 gemäß Figur 10 fluidverbunden.

Die beiden Kühlmittel-Kältemittel-Wärmeübertrager 7.1 und 7.2 als indirekte Kältemittelkondensatoren oder indirekte Gaskühler sind in dem AC-Zweig 2.1 des Kältemittelkreislaufes 2 gemäß Figur 9 seriell verschaltet, so dass der Kühlmittel-Kältemittel-Wärmeübertrager 7.1 mit dem Hochdruckausgang des Kältemittelverdichters 5 fluidverbunden ist und demselben der zusätzliche Kühlmittel-Kältemittel-Wärmeübertrager 7.2 stromabwärts nachgeschaltet ist.

Bei dem Kältemittelkreislauf 2 gemäß Figur 9 ist der Kühlmittel-Kältemittel-Wärmeübertrager 7.1 in einen Hochtemperaturkreislauf 8.20 eines als Hochtemperaturkühler ausgeführten Luft-Kühlmittel-Wärmeübertragers 8.2 eingebunden, während der weitere Kühlmittel-Kältemittel-Wärmeübertrager 7.2 in einen Niedertemperaturkreislauf 8.10 eines als Niedertemperaturkühler ausgeführten Luft-Kühlmittel-Wärmeübertragers 8.1 eingebunden ist. Damit wird Wärme aus dem Verdampferzweig 3.1 und/oder Chillerzweig 4.1 über zwei Temperaturniveaus an die Fahrzeugumgebung über einen Luftstrom L1 abgeführt. Hierbei sind die Komponenten 8.1 und 8.2 luftseitig seriell angeordnet, so dass zunächst der Luft-Kühlmittel-Wärmeübertrager 8.1 und anschließend der Luft-Kältemittel-Wärmeübertrager 8.2 von dem Luftstrom L1 durchströmt werden.

In einer weiteren Ausführungsform können beide indirekte Kühlmittel-Kältemittel-Wärmeübertrager 7.1 und 7.2 in den Niedertemperaturkreis 8.10 eingebunden werden, nur sollte kühlmittelseitig zunächst der Kühlmittel-Kältemittel-Wärmeübertrager 7.1 und im Anschluss der zusätzlichen Kühlmittel-Kältemittel-Wärmeübertrager 7.2 seriell durchströmt werden, um den optimalen Abkühleffekt zu erzielen (in Figur 9 nicht dargestellt).

Der Kältemittelkreislauf 2 der Kälteanlage 1 gemäß Figur 10 weist ebenso einen Kühlmittel-Kältemittel-Wärmeübertrager 7.1 und einen zusätzlichen Kühlmittel-Kältemittel-Wärmeübertrager 7.2 als indirekte Kältemittelkondensatoren oder indirekte Gaskühler auf, die jedoch im Gegensatz zu dem Kältemittelkreislauf 2 nach Figur 9 nicht seriell, sondern parallel fluidverbunden sind. Hierzu ist der Kühlmittel-Kältemittel-Wärmeübertrager 7.1 in einem ersten AC-Zweig 2.10 und der zusätzliche Kühlmittel-Kältemittel-Wärmeübertrager 7.2 in einem zweiten AC-Zweig 2.11 angeordnet, wobei diese beiden AC-Zweige 2.10 und 2.11 parallel fluidverbunden sind und stromaufwärts mit dem Hochdruckausgang des Kältemittelverdichters 5 und stromabwärts über den Hochdruckabschnitt des inneren Wärmeübertragers 11 mit den parallel verschalteten Verdampferzweig 3.1 und Chillerzweig 4.1 fluidverbunden sind.

Bei dem Kältemittelkreislauf 2 gemäß Figur 10 ist sowohl der eine als auch der zusätzliche Kühlmittel-Kältemittel-Wärmeübertrager 7.1 und 7.2 in einen Niedertemperaturkreislauf 8.10 eines als Niedertemperaturkühler ausgeführten Luft-Kühlmittel-Wärmeübertragers 8.1 eingebunden. Hierbei werden die beiden Kühlmittel-Kältemittel-Wärmeübertrager 7.1 und 7.2 kühlmittelseitig seriell durchströmt.

Alternativ ist es auch möglich, dass nur der zusätzliche Kühlmittel-Kältemittel-Wärmeübertrager 7.2 mit dem Luft-Kühlmittel-Wärmeübertrager 8.1 thermisch gekoppelt ist, während der Kühlmittel-Kältemittel-Wärmeübertrager 7.1 mit einem als Hochtemperaturkühler ausgebildeten Luft-Kühlmittel-Wärmeübertrager 8.2 über ein entsprechenden Hochtemperaturkühlkreislauf thermisch gekoppelt ist (in Figur 10 nicht dargestellt). In diesem Fall ist eine den Kühlmittel-Kältemittel-Wärmeübertrager 7.1 umströmende Bypassleitung (in Figur 10 nicht dargestellt) mit einem entsprechenden Ventilorgan vorgesehen, so dass im Falle des Auftretens einer Temperatur in dem Hochtemperaturkreislauf, die größer als die Temperatur des Kältemittels ist, eine weitere Erwärmung des Kältemittels vermieden wird.

Alternativ kann in diesem Fall auch ein wasserseitiger Bypass vorgesehen oder stehendes Wasser eingestellt werden bzw. der einer der beiden mit Kältemittel durchströmten AC-Zweige 2.10 oder 2.11 vollständig temporär inaktiv gesetzt werden. Für diese Maßnahme sind geeignete Absperr-, Umschalt-und Rückschlagventile vorzusehen.

Bei diesem Kältemittelkreislauf 2 gemäß den Figuren 9 und 10 wird mit dem zusätzlichen indirekten Kühlmittel-Kältemittel-Wärmeübertrager 7.2 eine erhöhte Kondensations- oder Gaskühlleistung erzeugt, die bei einer hohen maximalen Batteriekühlleistung des Kühlmittel-Kältemittel-Wärmeübertrager4 als Chiller und gegebenenfalls auch bei einer hieran angepassten vergrößerten Verdichterleistung des Kältemittelverdichters 5 erforderlich ist.

Als Sensoren sind in dem Kältemittelkreislauf 2 gemäß den Figuren 9 und 10 zur Steuerung und Regelung des Systems mehrere Druck-Temperatursensoren vorgesehen.

So ist dem Kältemittelverdichter 5 ein erster Druck-Temperatursensor pT1 am Hochdruckausgang zugeordnet, ferner ein zweiter Druck-Temperatursensor pT2 am Ausgang des Niederdruck-Kältemittelsammlers 10, ein dritter Druck-Temperatursensor pT3 am Ausgang des indirekten Kühlmittel-Kältemittel-Wärmeübertragers 7.2 (vgl. Figur 9) und schließlich ein vierter Druck-Temperatursensor pT4 am niederdruckseitigen Ausgang des Kühlmittel-Kältemittel-Wärmeübertragers 4 angeordnet. Die Funktion dieser Druck-Temperatursensoren ist mit denjenigen identisch, die im Zusammenhang mit dem Kältemittelkreislauf 2 gemäß den Figuren 1, 3, 4 und 5 erläutert wurden.

Bei dem Kältemittelkreislauf 2 gemäß Figur 10 sind entweder jedem der indirekten Wärmeübertrager 7.1 und 7.2 eigene Sensoren pT3.1 und pT3.2 nachgeschaltet oder es wird stromabwärts der Zusammenführung der beiden AC-Zweige 2.10 und 2.11 ein gemeinsamer Sensor pT3 angeordnet.

Zusammenfassend werden für die Kälteanlagen 1 gemäß den Figuren 1 bis 10 folgende Vorteile erreicht:
- Es werden hohe dauerhafte Ladeleistungen erzielt, speziell Schnellladungen mit Ladedauern von deutlich unter einer halben Stunde, ohne dass sich die entsprechende als Hochvoltbatterie ausgeführte Traktionsbatterie wesentlich erwärmt.
- Bei hohem Kühlleistungsbedarf der Hochvoltbatterie wird deren Kühlung sichergestellt. Daher erfolgt ein zeitlich verzögertes Eintreten der Reduktion der Leistungsfähigkeit von Innenraumraumklimatisierung oder Batteriekühlung.
- Bei hohem Kühlleistungsbedarf der Hochvoltbatterie wird deren Kühlung sichergestellt, ohne dass im Idealfall sowohl im Fahrzustand als auch im Stand der Innenraumkomfort während des Ladens eingeschränkt oder abgeschaltet wird.
- Es wird eine akustische Verbesserung gegenüber bekannten Systemen aufgrund der wegen zusätzlichen Kühlflächen der zweiten Kondensatoren auftretenden geringen Luftgeschwindigkeiten und damit geringeren Strömungsgeräuschen erzielt.

Der Einfachheit halber betreffen die Ausführungsbeispiele der Erfindung gemäß den Figuren 9 und 10 eine reine Kälteanlage mit einem niederdruckseitig angeordneten Kältemittelsammler 10. Darüber hinaus sind komplexere Systemverschaltungen mit weiteren Verdampfern und einer Wärmepumpenfunktionalität möglich. Auch kann eine Umpositionierung des Kältemittelspeichers von der Nieder- auf die Hochdruckseite erfolgen, insbesondere bei der Verwendung von rein unterkritisch arbeitenden Kältemitteln.

### BEZUGSZEICHEN:

- 1: Kälteanlage
- 2: Kältemittelkreislauf der Kälteanlage 1
- 2.1: AC-Zweig des Kältemittelkreislaufs 2
- 2.10: erster AC-Zweig des Kältemittelkreislaufs 2
- 2.11: zweiter AC-Zweig des Kältemittelkreislaufs 2

- 3: Verdampfer des Kältemittelkreislaufs 2
- 3.1: Verdampferzweig
- 4: Kühlmittel-Kältemittel-Wärmeübertrager (auch Chiller genannt) des Kältemittelkreislaufs 2
- 4.0: Kühlmittelkreislauf des Kühlmittel-Kältemittel-Wärmeübertragers 4
- 4.1: Chillerzweig
- 5: Kältemittelverdichter

- 6: äußerer Luft-Kältemittel-Wärmeübertrager des Kühlmittelkreislaufs 2
- 6.1: erster äußerer Luft-Kältemittel-Wärmeübertrager des Kühlmittelkreislaufs 2
- 6.2: zweiter äußerer Luft-Kältemittel-Wärmeübertrager

- 7: Kühlmittel-Kältemittel-Wärmeübertrager des Kühlmittelkreislaufs 2
- 7.0: Niedertemperaturkreislauf
- 7.1: erster Kühlmittel-Kältemittel-Wärmeübertrager des Kühlmittelkreislaufs 2
- 7.2: zweiter Kühlmittel-Kältemittel-Wärmeübertrager des Kühlmittelkreislaufs 2

- 8: Luft-Kühlmittel-Wärmeübertrager des Kältemittelkreislaufs 2
- 8.1: erster Luft-Kühlmittel-Wärmeübertrager des Kältemittelkreislaufs 2
- 8.10: Niedertemperaturkreislauf
- 8.2: zweiter Luft-Kühlmittel-Wärmeübertrager des Kältemittelkreislaufes 2
- 8.20: Hochtemperaturkreislauf
- 9: Luft-Kühlmittel-Wärmeübertrager des Kältemittelkreislaufes 2
- 9.0: Hochtemperaturkreislauf
- 10: Niederdruck-Kältemittelsammler

- AE1: Expansionsorgan des Verdampfers 3
- AE2: Expansionsorgan des Kühlmittel-Kältemittel-Wärmeübertragers 4

- L1: Luftstrom
- L2: Luftstrom

- R: Richtungspfeil für Kältemittel

## Patentansprüche

1. Kälteanlage (1) für ein Fahrzeug mit einem für den AC-Betrieb betreibbaren Kältemittelkreislauf (2), umfassend:
- einen zur Konditionierung eines dem Fahrzeuginnenraum zugeführten Zuluftstroms eingesetzten Verdampfer (3) mit einem demselben zugeordneten Expansionsorgan (AE1),
- einen zur Kühlung einer elektrischen Komponente des Fahrzeugs eingesetzten Kühlmittel-Kältemittel-Wärmeübertrager (4) mit einem demselben zugeordneten Expansionsorgan (AE2),
- einen Kältemittelverdichter (5),
- einen Kühlmittel-Kältemittel-Wärmeübertrager (7.1) als indirekter Kältemittelkondensator oder Gaskühler, welcher kühlmittelseitig mit einem als Hochtemperaturkühler ausgeführten Luft-Kühlmittel-Wärmeübertrager (8.2) thermisch gekoppelt ist, und
- einen zusätzlichen Kühlmittel-Kältemittel-Wärmeübertrager (7.2) als indirekter Kältemittelkondensator oder Gaskühler zur Erhöhung der Kondensations- oder Gaskühlleistung bei maximaler Kühlleistung des Kühlmittel-Kältemittel-Wärmeübertragers (4), welcher kühlmittelseitig mit einem als Niedertemperaturkühler ausgeführten Luft-Kühlmittel-Wärmeübertrager (8.1) thermisch gekoppelt ist,
**dadurch gekennzeichnet, dass**
- der eine Kühlmittel-Kältemittel-Wärmeübertrager (7.1) und der zusätzliche Kühlmittel-Kältemittel-Wärmeübertrager (7.2) in einer Reihenschaltung oder in einer Parallelschaltung fluidverbunden in einem AC-Zweig (2.1) sind, und
- die Reihenschaltung oder die Parallelschaltung des Kühlmittel-Kältemittel-Wärmeübertrager (7.1) mit dem zusätzlichen Kühlmittel-Kältemittel-Wärmeübertrager (7.2) mit der Hochdruckseite des Kältemittelverdichters (5) fluidverbunden ist.

2. Kälteanlage (1) nach Anspruch 1, bei welcher
- der eine Kühlmittel-Kältemittel-Wärmeübertrager (7.1) und der zusätzliche Kühlmittel-Kältemittel-Wärmeübertrager (7.2) in einer Reihenschaltung fluidverbunden in einem AC-Zweig (2.1) angeordnet sind, und
- der AC-Zweig (2.1) stromaufwärtsseitig mit der Hochdruckseite des Kältemittelverdichters (5) fluidverbunden ist.

3. Kälteanlage (1) nach Anspruch 1, bei welcher
- der eine Kühlmittel-Kältemittel-Wärmeübertrager (7.1) in einem ersten AC-Zweig (2.10) angeordnet ist,
- der zusätzliche Kühlmittel-Kältemittel-Wärmeübertrager (7.2) in einem zweiten AC-Zweig (2.11) angeordnet ist, und
- die parallel fluidverbundenen AC-Zweige (2.10, 2.11) stromaufwärtsseitig mit der Hochdruckseite des Kältemittelverdichters (5) fluidverbunden sind.

4. Fahrzeug mit einer Kälteanlage nach einem der Ansprüche 1 bis 3.

## Claims

1. Refrigeration system (1) for a vehicle having a refrigerant circuit (2) operable for AC operation, comprising:
- an evaporator (3) used for conditioning an inlet air stream supplied to the vehicle interior and having an associated expansion element (AE1),
- a coolant/refrigerant heat exchanger (4) used for cooling an electrical component of the vehicle and having an associated expansion element (AE2),
- a refrigerant compressor (5),
- a coolant/refrigerant heat exchanger (7.1) as an indirect refrigerant condenser or gas cooler which on the coolant side is thermally coupled to an air/coolant heat exchanger (8.2) configured as a high-temperature cooler, and
- an additional coolant/refrigerant heat exchanger (7.2) as an indirect refrigerant condenser or gas cooler for increasing the condensation or gas cooling performance in the case of maximum cooling performance of the coolant/refrigerant heat exchanger (4), which on the coolant side is thermally coupled to an air/coolant heat exchanger (8.1) configured as a low-temperature cooler,
**characterized in that**
- the one coolant/refrigerant heat exchanger (7.1) and the additional coolant/refrigerant heat exchanger (7.2) are fluid-connected in a series connection or in a parallel connection in an AC branch (2.1), and
- the series connection or the parallel connection of the coolant/refrigerant heat exchanger (7.1) with the additional coolant/refrigerant heat exchanger (7.2) is fluid-connected to the high-pressure side of the refrigerant compressor (5).

2. Refrigeration system (1) according to claim 1, in which
- the one coolant/refrigerant heat exchanger (7.1) and the additional coolant/refrigerant heat exchanger (7.2) are fluid-connected in a series connection arranged in an AC branch (2.1), and
- the AC branch (2.1) is fluid-connected upstream to the high-pressure side of the refrigerant compressor (5).

3. Refrigeration system (1) according to claim 1, in which
- the one coolant/refrigerant heat exchanger (7.1) is arranged in a first AC branch (2.10),
- the additional coolant/refrigerant heat exchanger (7.2) is arranged in a second AC branch (2.11), and
- the parallel fluid-connected AC branches (2.10, 2.11) are fluid-connected upstream to the high-pressure side of the refrigerant compressor (5).

4. Vehicle having a refrigeration system according to any one of claims 1 to 3.

## Revendications

1. Installation de réfrigération (1) pour un véhicule avec un circuit de réfrigérant (2) pouvant fonctionner en mode CA, comprenant :
- un évaporateur (3) utilisé pour conditionner un flux d'air d'alimentation acheminé vers l'habitacle de véhicule, avec un organe d'expansion (AE1) qui lui est associé,
- un échangeur de chaleur liquide de refroidissement-réfrigérant (4) utilisé pour refroidir un composant électrique du véhicule avec un organe d'expansion (AE2) qui lui est associé,
- un compresseur de réfrigérant (5),
- un échangeur de chaleur liquide de refroidissement-réfrigérant (7.1) en tant que condenseur de réfrigérant indirect ou de refroidisseur de gaz, lequel est couplé thermiquement côté liquide de refroidissement à un échangeur de chaleur air-liquide de refroidissement (8.2) conçu en tant que refroidisseur à haute température, et
- un échangeur de chaleur liquide de refroidissement-réfrigérant supplémentaire (7.2) en tant que condenseur de réfrigérant indirect ou de refroidisseur de gaz pour augmenter la puissance de condensation ou de refroidissement de gaz à la puissance de refroidissement maximale de l'échangeur de chaleur liquide de refroidissement-réfrigérant (4), lequel est couplé thermiquement, côté liquide de refroidissement, à un échangeur de chaleur air-liquide de refroidissement (8.1) conçu en tant que refroidisseur à basse température,
**caractérisée en ce que**
- l'échangeur de chaleur liquide de refroidissement-réfrigérant (7.1) et l'échangeur de chaleur liquide de refroidissement-réfrigérant supplémentaire (7.2) sont connectés fluidiquement dans un montage en série ou en parallèle dans une branche CA (2.1), et
- le montage en série ou le montage en parallèle de l'échangeur de chaleur liquide de refroidissement-réfrigérant (7.1) avec l'échangeur de chaleur liquide de refroidissement-réfrigérant supplémentaire (7.2) est connecté fluidiquement au côté haute pression du compresseur de réfrigérant (5).

2. Installation de réfrigération (1) selon la revendication 1, dans laquelle
- l'échangeur de chaleur liquide de refroidissement-réfrigérant (7.1) et l'échangeur de chaleur liquide de refroidissement-réfrigérant supplémentaire (7.2) sont disposés de manière connectée fluidiquement dans un montage en série dans une branche CA (2.1), et
- la branche CA (2.1) est connectée fluidiquement côté amont au côté haute pression du compresseur de réfrigérant (5).

3. Installation de réfrigération (1) selon la revendication 1, dans laquelle
- l'échangeur de chaleur liquide de refroidissement-réfrigérant (7.1) est disposé dans une première branche CA (2.10),
- l'échangeur de chaleur liquide de refroidissement-réfrigérant supplémentaire (7.2) est disposé dans une seconde branche CA (2.11), et
- les branches CA (2.10, 2.11) connectées fluidiquement en parallèle sont connectées fluidiquement côté amont au côté haute pression du compresseur de réfrigérant (5).

4. Véhicule avec une installation de réfrigération selon l'une quelconque des revendications 1 à 3.
